# EUROPEAN PATENT APPLICATION

(11) **EP 3 666 730 A2**
(43) Date of publication of application: **17.06.2020**
(21) Application number: 19215243.7
(22) Date of filing: 11.12.2019
(51) Int. Cl.: C01B 32/372, B01J 20/10, B01J 20/20

(54) **FILTER, FILTER ASSEMBLY, FILTER DEVICE AND WATER PURIFICATION SYSTEM**

(30) Priority: 14.12.2018 TW 107145237; 19.11.2019 TW 108141991
(71) Applicant: AUO Crystal Corporation, Taichung City 421 (TW)
(72) Inventor: LEE, Tung-Feng, Taichung City 421 (TW); HSU, Meng-Kwei, Taichung City 406 (TW); YANG, Chun-Liang, Taichung City 406 (TW)
(74) Representative: Delorme, Nicolas

(57) **Abstract**

A filter (10) for producing a water composition containing silicic acid and hydrogen gas includes a carrier material (102) and a silicon material (106) supported on the carrier material (106) . The filter (10) has a diameter ranging from 50 µm to 10 mm. A filter assembly, a filter device (2), and a water purification system (4) containing the filter (10) are also provided.

## Description

The present disclosure relates to a filter, as well as a filter assembly, a filter device, and a water purification system including the same, and more particularly to a filter for producing a water composition containing silicic acid and hydrogen gas.

Hydrogen-dissolved drinking water is advantageous to human beings for it can neutralize reactive oxygen species or free radicals present in the body. Therefore, research topics related to hydrogen-dissolved drinking water has become popular in recent years.

Currently, most commonly sold hydrogen-dissolved drinking water is produced by directly dissolving high-purity hydrogen in water, or reacting magnesium powder or a magnesium tablet with pure water to generate hydrogen gas. However, the former method has problems such as difficulty in obtaining high-purity hydrogen, difficulty in dissolving hydrogen in water, and safety concerns over use of high-purity hydrogen. With regard to the latter method, magnesium hydroxide that is produced by reacting magnesium with water may not be simultaneously taken with some drugs used for treating cardiovascular diseases. Moreover, if the content of magnesium hydroxide is too high, it is likely to lead to acute drug poisoning, acute renal failure, hypermagnesemia or other adverse health conditions.

Based on the above, safely and continuously producing hydrogen-dissolved drinking water which is beneficial to living organisms (e.g., human beings) remains a problem to be solved by those skilled in the art.

Therefore, an object of the present disclosure is to provide a filter, a filter assembly, a filter device, and a water purification system for producing a water composition containing silicic acid and hydrogen gaswhich can alleviate at least one of the drawbacks of the prior art.

According to one aspect of the present disclosure, the filter includes a carrier material and a silicon material that is adhered to or supported on the carrier material. The filter has a diameter ranging from 50 µm to 10 mm.

According to another aspect of the present disclosure, the filter assembly includes a plurality of the abovementioned filters.

According to yet another aspect of the present disclosure, the filter device includes a first housing and the abovementioned filter assembly. The first housing defines a first receiving space and includes a first inlet and a first outlet that are in fluid communication with the first receiving space. The filter assembly is received in the first receiving space of the first housing.

According to still yet another aspect of the present disclosure, the water purification system includes at least one filter device as mentioned above as a first filter device, a pipeline unit, and optionally a discharge unit. The pipeline unit fluidly connects with the first filter device. The discharge unit is disposed downstream of the first filter device and is connected to the pipeline unit to discharge a liquid, a gas or the combination thereof from the pipeline unit.

Other features and advantages of the present disclosure will become apparent in the following detailed description of the embodiment with reference to the accompanying drawings, of which:
FIG. 1A is a schematic view showing a first embodiment of a filter according to the present disclosure;
FIG. 1B is a schematic view showing a second embodiment of the filter;
FIG. 1C is a schematic view showing a third embodiment of the filter;
FIG. 1D is a schematic view showing a fourth embodiment of the filter;
FIG. 1E is a schematic view showing a fifth embodiment of the filter;
FIG. IF is a schematic view showing a sixth embodiment of the filter;
FIG. 1G is an electron micrograph showing the first embodiment of the filter that includes a silicon material partially covering a surface of a carrier material;
FIG. 1H is an electron micrograph showing the second embodiment of the filter that includes the silicon material entirely covering the surface of the carrier material;
FIG. 2A is a schematic view of a first example of a filter assembly that includes a plurality of the first embodiment of the filters;
FIG. 2B is a schematic view of a second example of the filter assembly that includes a plurality of the second embodiment of the filters;
FIG. 2C is a schematic view of a third example of the filter assembly that includes a plurality of the first and second embodiments of the filters;
FIG. 2D is a schematic view of a fourth example of the filter assembly that includes a plurality of the second, third and fourth embodiments of the filters;
FIG. 2E is a schematic view of a fifth example of the filter assembly that includes the second, third, and fifth embodiments of the filters;
FIG. 2F is a schematic view of a sixth example of the filter assembly that includes the first and second embodiments of the filters having two different carriers;
FIG. 2G is a schematic view of a seventh example of the filter assembly that includes the second and third embodiments of the filters, and at least one auxiliary filter;
FIG. 2H is a schematic view of an eighth example of the filter assembly that includes the second, third and fourth embodiments of the filters;
FIG. 2I is a schematic view of a ninth example of the filter assembly that includes a plurality of the first embodiment of the filters and a plurality of the auxiliary filters;
FIG. 2J is a schematic view of a tenth example of the filter assembly that includes a plurality of the second embodiment of the filters and a plurality of the auxiliary filters;
FIG. 2K is a schematic view of an eleventh example of the filter assembly that includes the first and second embodiments of the filters and a plurality of the auxiliary filters;
FIG. 2L is a schematic view of a twelfth example of the filter assembly that includes the second and fifth embodiments of the filters and a plurality of the auxiliary filters;
FIG. 2M is a schematic view of a thirteenth example of the filter assembly that includes the second and third embodiments of the filters and the auxiliary filters;
FIG. 2N is a schematic view of a fourteenth example of the filter assembly that includes a plurality of the sixth embodiment of the filters;
FIG. 2O is a schematic view of a fifteenth example of the filter assembly that includes the first, third and fifth embodiments of the filters and the auxiliary filters;
FIG. 2P is an electron microscopy image showing an outer appearance and size of the fifth example of the filter assembly;
FIG. 2Q is a partially enlarged image of FIG. 2P;
FIG. 3 is a perspective view showing an apparatus used in a method of preparing the filter assembly according to this disclosure;
FIG. 4A is a schematic view showing a first embodiment of a filter device according to the present disclosure;
FIG. 4B is a schematic view showing a second embodiment of the filter device;
FIG. 4C is a graph showing oxidation-reduction potential (ORP) and silicic acid concentration determined at different output amount of a water composition that is produced by the first embodiment of the filter device;
FIG. 4D is a schematic view showing a third embodiment of the filter device;
FIG. 4E is a graph showing oxidation-reduction potential (ORP) and silicic acid concentration determined at different output amount of the water composition that is produced by the third embodiment of the filter device;
FIG. 5A is a schematic view showing a fourth embodiment of the filter device;
FIG. 5B is a perspective view showing the filter assembly of the fourth embodiment of the filter device which is integrally shaped as two columnar blocks each having a central through hole;
FIG. 6A is a schematic view showing a fifth embodiment of the filter device;
FIG. 6B is a perspective view showing the filter assembly of the fifth embodiment of the filter device which is integrally shaped as two columnar blocks each having a central through hole and which includes a layer of auxiliary filters that contain antimicrobial component;
FIG. 7 is a schematic view showing a sixth embodiment of the filter device;
FIG. 8 is a schematic view showing a seventh embodiment of the filter device;
FIG. 9 is a schematic view showing an eighth embodiment of the filter device;
FIG. 10 is a schematic view showing a ninth embodiment of the filter device;
FIG. 11 is a schematic view showing a tenth embodiment of the filter device;
FIG. 12 is a schematic view showing an eleventh embodiment of the filter device;
FIG. 13 is a schematic view showing a twelfth embodiment of the filter device;
FIG. 14 is a schematic view showing a first embodiment of a water purification system according to the present disclosure;
FIG. 15 is a schematic view showing a second embodiment of the water purification system;
FIG. 16 is a schematic view showing a third embodiment of the water purification system; and
FIG. 17 is a schematic view showing an embodiment of a water processing system according to the present disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

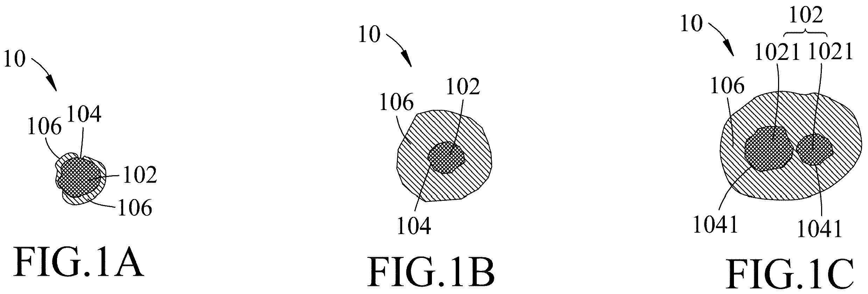

Referring to FIG. 1A, a first embodiment of a filter 10 according to the present disclosure is adapted for purifying water and producing a water composition containing silicic acid and hydrogen gas. The filter 10 includes a carrier material 102 having a surface 104, and a silicon material 106 adhered to or supported on the surface 104 of the carrier material 102. The carrier material 102 includes at least one carrier 1021. Examples of the carrier 1021 may include, but are not limited to, activated carbon, ceramic, bamboo charcoal, medical stone, quartz sand, diatomaceous earth, ore, zeolite, silicon granule, polymer granule (such as polyethylene, polyethylene terephthalate, polycarbonate, polypropylene), and polymer fiber. The carrier material 102 may be porous or non-porous. The carrier material 102 may have an average particle diameter that ranges from 25 µm to 2.5 mm, preferably from 75 µm to 2 mm, more preferably from 125 µm to 1.5 mm, and even more preferably from 150 µm to 1.2 mm. In certain embodiments, the carrier material 102 is the activated carbon having a plurality of micropores distributed on the surface 104 thereof. The activated carbon may be purchased, for example, from Haycarb PLC with a mesh dimension of 12×40 (Model No. : RWAP 1074), or from Jacobi Carbons with a mesh dimension of 60×100. A portion of the silicon material 106 adsorbed on the surface 104 is deposited in the micropores of the activated carbon, such that the contact area between the to-be-treated water and the silicon material 106 can be increased, thereby increasing the hydrogen gas and silicic acid concentration in the water composition produced therefrom.

The silicon material 106 may include a plurality of nano silicon particles having an average particle diameter (D50) that ranges from 50 nm to 800 nm, preferably from 100 nm to 400 nm, more preferably from 150 nm and 350 nm, and even more preferably from 200 nm to 300 nm. The average particle diameter (D50) may be measured using a laser diffraction particle size analyzer (Manufacturer: Horiba, Ltd.;Model No.: LA950V2). It should be noted that, the smaller the average particle diameter of the nano silicon particles, the greater the reactivity of the nano silicon particles, such that the reaction between the nano silicon particles and the to-be-treated water will be faster, resulting in a higher production rate of the water composition containing the silicic acid and hydrogen gas. However, if the reaction between the nano silicon particles and the to-be-treated water is too fast, the nano silicon particles will be quickly consumed, which means that the average particle diameter of the nano silicon particles should not be too small. Therefore, the average particle diameter of the nano silicon particles is preferably greater than 50 nm, more preferably ranging from 100 nm to 400 nm, resulting in a moderate production rate of the water composition containing the silicic acid and hydrogen gas. In certain embodiments, the silicon material 106 may include a plurality of micro silicon particles having an average particle diameter that ranges from 800 nm to 1.5 µm, even though a lower production rate of the water composition containing the silicic acid and the hydrogen gas is expected.

The filter 10 may have a diameter that ranges from 50 µm to 10 mm, preferably from 75.5 µm to 8 mm, more preferably from 300 µm to 6 mm, even more preferably from 600 µm to 5 mm, and still even more preferably from 1 mm to 4 mm.

In this embodiment, the silicon material 106 covers a portion (such as 10% to 80%) of an area of the surface 104 of the carrier material 102, preferably larger than 50%, and more preferably around 80% of the area of the surface 104 of the carrier material 102. When the area of the surface 104 covered by the silicon material 106 is larger, the binding force between the nano silicon particles as well as the binding force between the silicon material 106 and the carrier material 102 may be stronger, such that the silicon material 106 may not be easily separated from the surface 104 of the carrier material 102 due to water current. Therefore, the silicon material 106 can be supported on the surface 104 for a longer time period, thereby extending the service life of the filter 10. If the silicon material 106 is sparsely distributed on the surface 104, the water current may cause the silicon material 106 to be easily separated from the surface 104 of the carrier material 102, which shortens the service life of the filter 10. Moreover, in order to avoid insufficiency of the service life of the filter 10 according to the present disclosure, the silicon material 106 may be present in an amount larger than 10%, preferably ranging from 40 wt% to 95 wt% based on 100 wt% of the filter 10.

The amount of the silicon material 106 can be determined by contacting the filter 10 with an organic solvent (such as tetramethylammonium hydroxide) or an alkaline solution (such as sodium hydroxide or potassium hydroxide), so as to separate the carrier material 102 from the silicon material 106, and then measuring the amount of the carrier material 102 after a drying or filtering process, so as to determine the amount of the silicon material 106.

Referring to FIG. 1B, a second embodiment of the filter 10 according to the present disclosure is substantially the same as the first embodiment of the filter 10, except that the silicon material 106 in this embodiment entirely covers the surface 104 of the carrier material 102, and forms an active layer on the carrier material 102.

The active layer formed by the nano silicon particles entirely covering the surface 104 of the carrier material 102 may have an average thickness that ranges from 200 nm to 3 mm, preferably from 500 nm to 2.5 mm, so that a predetermined time period of the service life of the filter 10 (such as 3 months or half a year) is expected to be achieved. In addition, when the amount of the nano silicon particles is greater, the active layer thus formed may be thicker, such that binding between the nano silicon particles may be stronger and service life of the filter 10 may be longer. However, if the active layer is too thick, the surface area 104 of the carrier material 102 per unit volume of the nano silicon particles will become small, resulting in a lower production rate of the water composition containing the silicic acid and the hydrogen gas. In contrast, if the active layer is too thin, the silicon material 106 would quickly lose its capability of producing the water composition.

Referring to FIG. 1C, a third embodiment of the filter 10 according to the present disclosure is substantially similar to the second embodiment. The difference resides in that, the carrier material 102 in third embodiment includes multiple carriers 1021. In this embodiment, these carriers 1021 are the same. The carriers 1021 of this embodiment may be formed by splitting the carrier material 102 of the filter 10 of the second embodiment during preparation process of the filter 10. For example, the carrier material 102 (such as an activated carbon) may have an average diameter that ranges from 25 µm to 2.5 mm, which may be split into a plurality of the carriers 1021, each of which has an average diameter that ranges from 0.2 µm to 2 mm, preferably from 0.2 µm to 1.5 mm. When the average diameters of the carriers 1021 are very small, the carriers 1021 may aggregate with the nano silicon particles to form the filter 10. Therefore, as compared to the first and second embodiments which have one carrier 1021, the carrier material 102 of the thus prepared filter 10 in this embodiment may have a larger surface 104 for the silicon material 106 to be supported thereon, thereby extending the time period for continuous release of silicic acid and hydrogen gas. In addition, the filter 10 of this embodiment may have a diameter larger than that of the first or second embodiment, such that stability of the filter 10 can be enhanced so as to extend the service life thereof. In other embodiments, the carriers 1021 that do not split from the carrier material 102 of the filter 10 of the second embodiment may have the same range of average particle diameter as the aforementioned carrier material 102 of the second embodiment.

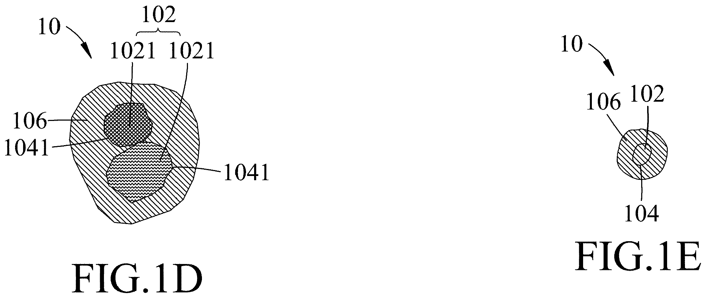

Referring to FIG. 1D, a fourth embodiment of the filter 10 according to the present disclosure is substantially the same as the third embodiment, except that the carrier material 102 includes different carriers 1021. For example, a portion of the carriers 1021 may be activated carbon, and another portion of the carriers 1021 may be ore, the surfaces 1041 of these carriers 1021 being entirely covered by the nano silicon particles, which form an active layer.

Referring to FIG. 1E, a fifth embodiment of the filter 10 according to the present disclosure is substantially similar to the second embodiment, except that the carrier material 102 is a silicon granule formed by aggregation of a plurality of nano silicon particles, and the silicon material 106 includes a plurality of the nano silicon particles that entirely covers the surface 104 of the silicon granule. In a variation of the embodiment, the carrier material 102 may be a silicon granule that consists of a single micro silicon particle. The silicon granule may have an average particle diameter that ranges from 0.2 mm to 2 mm, and the nano silicon particles have an average particle diameter that is not greater than 800 nm. In this embodiment, the silicon granule and the nano silicon particles are present in an amount that ranges from 99 wt% to 100 wt% based on 100 wt% of the filter 10.

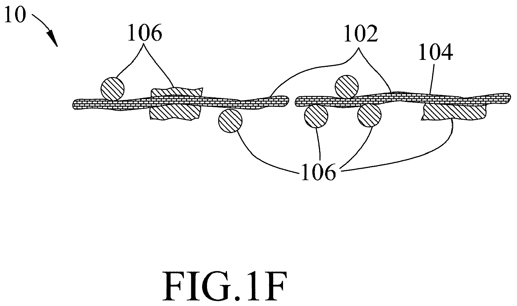

Referring to FIG. 1F, a sixth embodiment of the filter 10 according to the present disclosure includes a polymer fiber serving as the carrier material 102, and the silicon material 106 supported on the surface of the polymer fiber. The polymer fiber may be made by subjecting a plurality of fiber resin to an electrospinning process or a melt-blown process, and may have an average cross-sectional diameter that ranges from 0.5 µm to 100 µm.

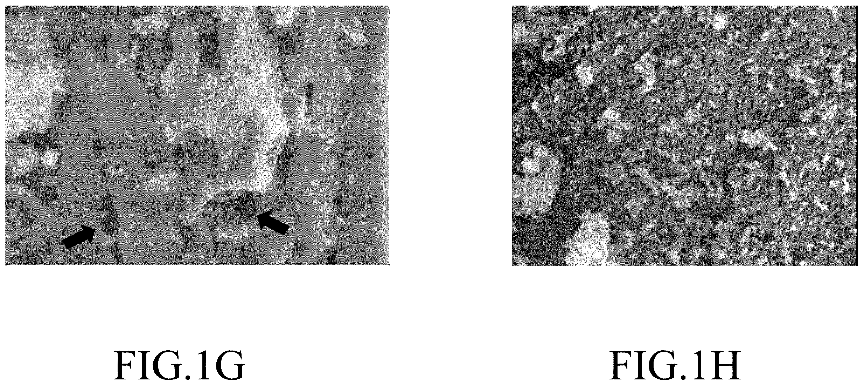

Referring to FIG. 1G, a partially enlarged electron micrograph of the first embodiment of the filter 10 shows that the activated carbon has a plurality of micropores (as indicated by the arrows) distributed on the surface 104 thereof, and the nano silicon particles (as indicated by light color area) partially cover the surface 104 of the activated carbon, i.e., the silicon material 106 covers between 10% to 80% of an area of the surface 104 of the activated carbon, and are partially deposited in the micropores of the activated carbon.

Referring to FIG. 1H, a partially enlarged electron micrograph of the second embodiment of the filter 10 shows that the nano silicon particles entirely cover the surface 104 of the activated carbon, i.e., the silicon material 106 covers 100% of an area of the surface 104 of the activated carbon, and are entirely deposited in the micropores on the surface 104 of the activated carbon, which renders the micropores thereon invisible.

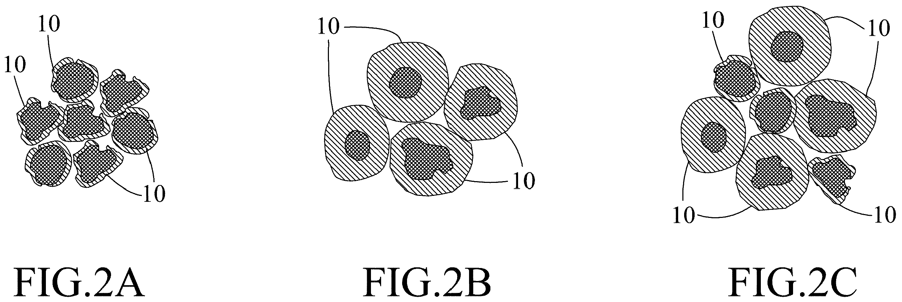

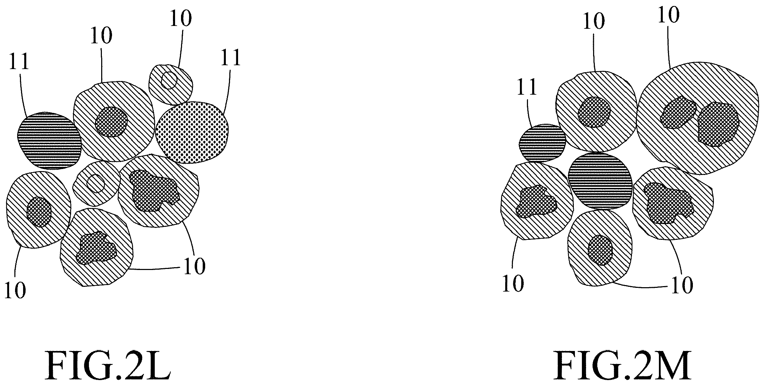

According to the disclosure, a filter assembly adapted for producing the water composition containing silicic acid and hydrogen gas includes a plurality of the filters 10, which may be any one of the first to the sixth embodiments of the filters 10 as mentioned in the foregoing, or combinations thereof. In certain embodiments, the filter assembly may further include at least one auxiliary filter 11 as shown, e.g., in FIG. 2M below. Examples of the auxiliary filter 11 may include, but are not limited to, activated carbon, ceramic, bamboo charcoal, medical stone, quartz sand, diatomaceous earth, ore, zeolite, silicon granules, polymer granule, polymer fiber, water glass, and combinations thereof. The amount ratio of the filters 10 and the auxiliary filters 11 of the filter assembly may be adjusted according to practical requirements, and is not limited to those examples as shown in FIGS. 2A to 2O.

Referring to FIG. 2A, a first example of a filter assembly according to the present disclosure includes a plurality of the first embodiment of the filters 10, i.e., each of the carrier materials 102 includes activated carbon and each of the silicone materials 106 includes nano silicon particles.

Referring to FIG. 2B, a second example of the filter assembly according to the present disclosure is substantially the same as the first example, except that the second example of the filter assembly includes a plurality of the second embodiments of the filters 10. Since the nano silicon particles entirely cover the surface 104 of each of the activated carbon, the filter assembly may have a longer service life.

Referring to FIG. 2C, a third example of the filter assembly according to the present disclosure includes a plurality of the first and second embodiments of the filters 10. The service life of the filter assembly may be controlled by adjusting the amount ratios of the first and second embodiments of the filters 10. For example, when the amount of the silicon material 106 in the first embodiment of the filters 10 becomes low, the second embodiment of the filters 10 may be added to increase the overall amount of the silicon materials 106 in the filter assembly.

It should be noted that, the filters 10 of the filter assembly may include at least two different groups of filters 10 (e.g., a first group of filters 10 and a second group of filters 10), in which the carrier material 102 of each of the first group of filters 10 is different from that of each of the second group of filters 10.

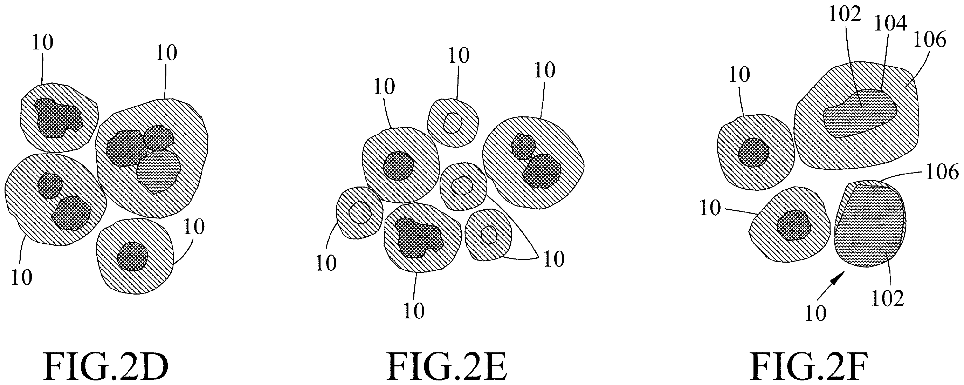

For example, referring to FIG. 2D, a fourth example of the filter assembly according to the present disclosure includes a first group of filters (i.e., the second embodiment of the filters 10 having one carrier 1021) and a second group of filters (i.e., the third and fourth embodiments of the filters 10 having multiple carriers 1021), and the amounts thereof may be adjusted according to practical requirements.

Referring to FIG. 2E, a fifth example of the filter assembly according to the present disclosure includes the second, third and fifth embodiments of the filters 10, and the amounts thereof may be adjusted according to practical requirements. It should be noted that, when the filter assembly contains the second embodiment of the filters 10 in a majority, one of the third and fifth embodiments of the filters 10 may be omitted therefrom. Likewise, when the filter assembly contains the third embodiment of the filters 10 in a majority, one of the first and fifth embodiments of the filters 10 may be omitted therefrom.

Referring to FIG. 2F, a sixth example of the filter assembly according to the present disclosure includes the first and second embodiments of the filter 10. The carrier material 102 of each of the filters 10 may be the same or different. In this example, the carrier material 102 for two of the second embodiments of the filter 10 is the activated carbon, whereas the carrier materials 102 for the remaining one of the second embodiment of the filter 10 and the first embodiment of the filter 10 are ores that may exhibit additional function. For example, the ores may be capable of emitting far infrared light, which creates a resonance effect through vibration of molecular motion of water molecules of the water composition so as to divide the water molecules into smaller size, thereby the water molecules of the water composition can be easily adsorbed.

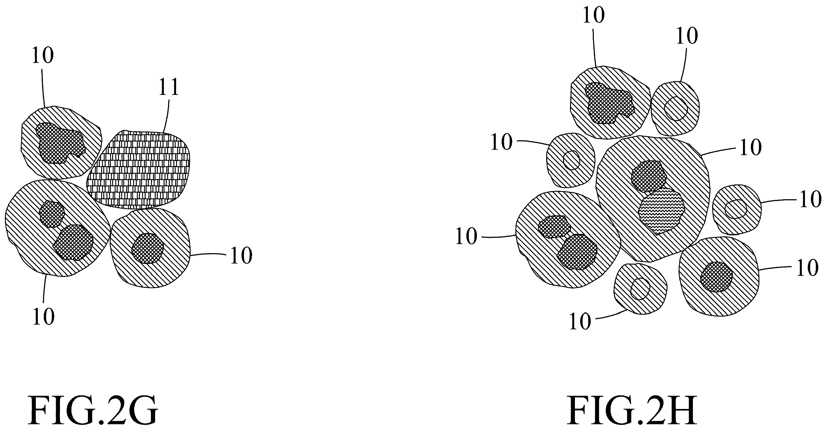

Referring to FIG. 2G, a seventh example of the filter assembly according to the present disclosure includes the second and third embodiments of the filters 10, and at least one auxiliary filter 11. The amounts of the filters 10 and the auxiliary filter 11 may be adjusted according to practical requirements. The auxiliary filter 11 is added for adjusting the amount ratio of the filters 10 in the filter assembly, and/or to provide additional functions. For example, the auxiliary filter 11 may be the medical stone that is rich in minerals such as iron, calcium, zinc, potassium, silica, aluminum, etc., and has a strong ion exchange capacity, and thus may be utilized to remove harmful substances, adjust pH value, increase oxygen gas content, and dissolve a proper amount of the aforesaid minerals in water. Alternatively, the auxiliary filter 11 may include a material that is capable of releasing trace elements (such as iodine and selenium).

Referring to FIG. 2H, an eighth example of the filter assembly according to the present disclosure is substantially similar to the fifth example of the filter assembly, except that the eighth example further includes a plurality of the fourth embodiment of the filters 10.

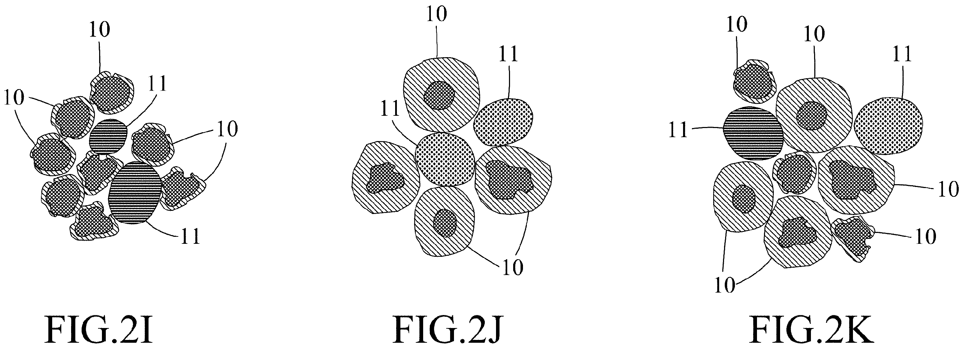

Referring to FIG. 2I, a ninth example of the filter assembly according to the present disclosure is substantially similar to the first example of the filter assembly, except that the ninth example further includes multiple auxiliary filters 11, which may be the activated carbon for adjusting the amount ratio of the silicon material 106 of the filters 10 in the filter assembly. In addition, the auxiliary filters 11 may have an average particle diameter that is different from that of the carrier material 102 of the filter 10.

Referring to FIG. 2J, a tenth example of the filter assembly according to the present disclosure is substantially similar to the second example of the filter assembly, except that the tenth example further includes multiple auxiliary filters 11. In this example, each of the auxiliary filters 11 includes an antimicrobial component supported on a surface thereof for effectively avoiding excessive growth of microorganisms, such as bacteria, in the filters 10 and in the thus produced water composition. Examples of the antimicrobial component may include, but are not limited to, nano silver particles, nano zinc particles, and the combination thereof.

Referring to FIG. 2K, an eleventh example of the filter assembly according to the present disclosure is substantially similar to the third example, except that the eleventh example further includes multiple auxiliary filters 11 as shown in FIGS. 2I and 2J.

Referring to FIG. 2L, a twelfth example of the filter assembly according to the present disclosure is substantially similar to the eleventh example, except that the first embodiment of the filters 10 in the eleventh example are replaced by the fifth embodiment of the filters 10.

Referring to FIG. 2M, a thirteenth example of the filter assembly according to the present disclosure is substantially similar to the seventh example of the filter assembly, except that multiple auxiliary filters 11 are included in this example.

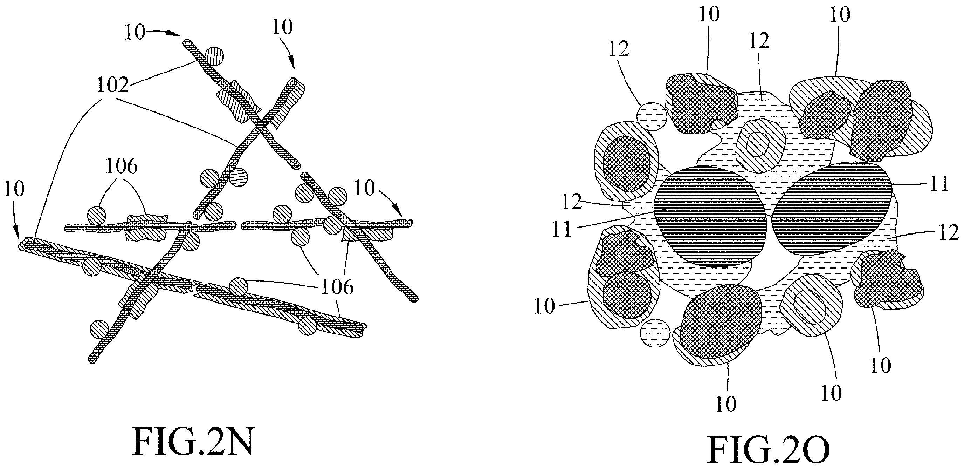

Referring to FIG. 2N, a fourteenth example of the filter assembly according to the present disclosure includes a plurality of the sixth embodiment of the filters 10, in which each of the carrier materials 102 is a polymer fiber, which may be in nanoscale or microscale range. The filter assembly may be prepared by subjecting a mixture that includes the nano silicon particles and a polymer (such as polyacrylonitrile) dissolved in a spinning solvent (such as N,N-dimethylformamide) to an electrospinning process. The filter assembly may be further subjected to oxidation and carbonization reactions, so as to obtain a carbonized polymer fiber having the nano silicon particles adsorbed thereon. Alternatively, the fourteenth example of the filter assembly may be made by subjecting a mixture of the nano silicon particles and a resin (such as polypropylene, polyethylene terephthalate, polybutylene terephthalate and polylactic acid, etc.) to a melt-blown process using a screw extruder.

Referring to FIG. 2O, a fifteenth example of the filter assembly according to the present disclosure includes the first, third and fifth embodiments of the filters 10, and optionally the auxiliary filters 11. The filter assembly may further include at least one binder 12 for binding the filters 10 therebetween, and for binding the filters 10 to the auxiliary filters 11 so as to enhance the overall strength of the filter assembly. It should be noted that, this example may also include other abovementioned embodiments of the filters 10. The binder 12 may be in a melting state or in a partially melting state. Examples of the binder 12 may include, but are not limited to, polyether, acrylic resin, styrene, polyamide, polyester, polyolefin, cellulose, glycerol, polyethylene glycol, polyvinyl alcohol, and combinations thereof.

In this example, the carrier materials 102 of the filters 10 are the activated carbon, and the activated carbon and the silicon material 106 (i.e., the nano silicon particles) cooperatively form a sintered activated carbon or a compressed activated carbon (i.e., a molding active carbon as observed from the overall appearance of the filters 10). The nano silicon particles cover larger than 10% of an area of the surface 104 of the activated carbons, preferably larger than 40% of the area thereof. To be specific, the filter assembly of this example are prepared by mixing the activated carbon, the nano silicon particles and the binder 12, and then hot pressing the resultant mixture in a mold to form a green body, followed by sintering the green body at a predetermined temperature. Alternatively, the filter assembly may be prepared by mixing any of the abovementioned embodiments of the filters 10 with the binder 12 and then subjecting the mixture to a hot pressing process and a sintering process. It is worth mentioning that after sintering, the binder 12 may be formed with a plurality of holes (not shown in the figures) to allow the to-be-treated water to flow therethrough.

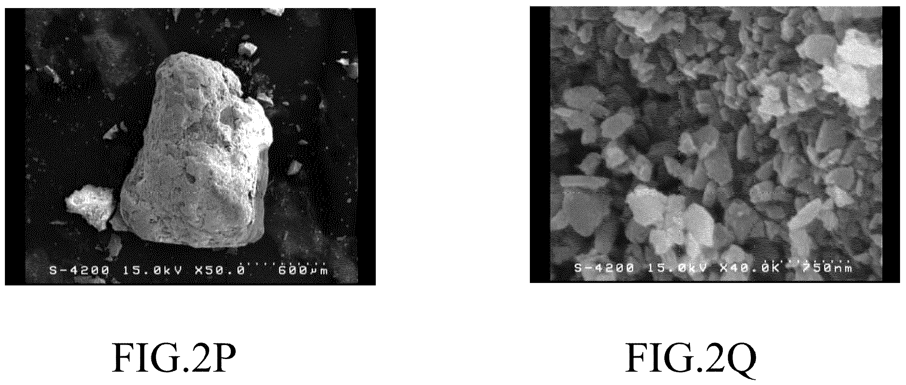

FIG. 2P is an electron micrograph image of the fifth example of the filter assembly which is taken using a scanning electron microscope (SEM) (Manufacturer: Hitachi, Ltd.; Model No. : S-400) . The filter assembly includes the filters 10 that have a dimension of 1 mm × 1.3 mm, in which a plurality of the nano silicon particles cover the carrier material 102 (i.e., the activated carbon (Manufacturer: Haycarb PLC; Model No. : RWAP 1074 with a mesh dimension of 12x40 and a diameter ranging from 0.425 mm to 1.7 mm).

FIG. 2Q is a partially enlarged image of FIG. 2P, showing the nano silicon particles aggregating on the surface 104 of the carrier material 102. Each of the nano silicon particles has an average diameter ranging from 75 nm to 450 nm, which is determined by analyzing the SEM image. Alternatively, the diameter of the filter 10 and the nano silicon particle may be determined using a laser diffraction particle size analyzer (Manufacturer: Horiba, Ltd.;Model No.: LA950V2) that can measure a particle diameter that ranges from 10 nm to 3 mm. In addition, a mesh screen may be used for determining the diameter of the filter 10 and the nano silicon particle that falls within a microscale range and a nanoscale range.

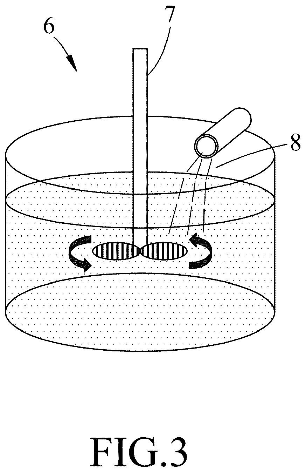

Referring to FIG. 3, a stirring apparatus 6 equipped with an impeller 7 for providing an appropriate shear force is exemplified, which is suitable to be applied in a method for preparing the abovementioned examples of the filter assembly according to the present disclosure. The method includes the steps of: (a) mixing the silicon material 106 (such as the nano silicon particles) with a solvent (such as an alcohol) in the stirring apparatus 6 to obtain a nano silicon slurry 8; and (b) mixing the carrier material 102 (such as the activated carbon) and the nano silicon slurry 8 under stirring, such that the nano silicon particles and the activated carbon collide and aggregate to one another so as to obtain the filter assembly having a diameter that ranges from 50 µm to 10 mm. The speed and mode of rotation (i.e., continuous or discontinuous rotation) of the impellar 7 may be adjusted according to practical requirements.

In certain embodiments, step (b) is conducted at a temperature ranging from 50°C to 300°C to remove the solvent. In step (a), the nano silicon particles of the nano silicon slurry 8 may be present in an amount ranging from 10 wt% to 40 wt% based on the total amount of the nano silicon slurry 8. The nano silicon particles are present in an amount that ranges from 40 wt% to 95 wt% based on a total weight of the silicon material 106 and the carrier material 102.

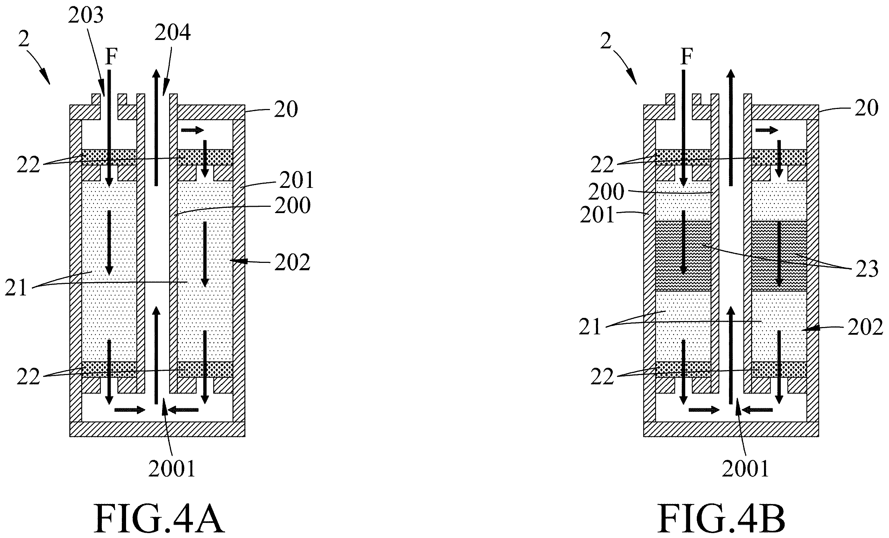

Referring to FIG. 4A, a first embodiment of a filter device 2 according to the present disclosure is adapted for purifying a to-be-treated water and producing the water composition containing silicic acid and hydrogen gas. The filter device 2, which is in a tubular form, includes a first housing 20 and a filter assembly 21. The first housing 20 defines a first receiving space 202, and has a first inlet 203 and a first outlet 204 which are fluidly communicated with the first receiving space 202. In this embodiment, the first inlet 203 and the first outlet 204 are disposed at a same side (i.e., a top side) of the first housing 20. The first housing 20 includes an inner tubular wall 200 that is formed with a flow channel 2001 communicating with the first outlet 204 and that extends from the top side of the first housing 20 toward a bottom side of the first housing 20, and an outer tubular wall 201 that surrounds the inner tubular wall 200. The filter assembly 21 is disposed in the first receiving space 202 of the first housing 20 and is positioned at a region between the inner tubular wall 200 and the outer tubular wall 201. The filter assembly 21 may include at least one of the abovementioned examples of the filter assemblies (e.g., the first to the fourteenth examples of the filter assemblies) or a plurality of the abovementioned filters 10 (e.g., the first to the sixth embodiments of the filters 10) . The filters 10 may be further mixed with the auxiliary filter 11. The amounts (in terms of quantity or weight) of the filter 10 and the auxiliary filter 11 in the filter assembly 21 may be adjusted according to practical requirements. In certain embodiments, the filter device 2 may further include at least one primary filter unit 22 (such as non-woven fabric, fiber mesh, sponge, etc.) which is received in the first receiving space 202 and is adapted for filtering impurities having large particle size from the to-be-treated water. In this embodiment, the filter device 2 includes two primary filter units 22 that are disposed upstream and downstream of the filter assembly 21 along a water flow direction F, respectively (i.e., the upstream and downstream primary filter units 22) . In use, a predetermined amount of the to-be-treated water is introduced to the first housing 20 through the first inlet 203, flows through the upstream primary filter units 22, the filter assembly 21 and the downstream primary filter units 22 along the water flow direction F, where the to-be-treated water is reacted with the silicon material 106 of the filter assembly 21 to produce the water composition containing the silicic acid and the hydrogen gas. The water composition then flows along the flow channel 2001 and leaves the first housing 20 through the first outlet 204. As shown in FIG. 4A, the filter assembly 21 completely fills a region of the first receiving space 202 between the upstream and downstream primary filter units 22, but is not limited thereto in practice. In a variation of this embodiment, the filter assembly 21 partially fills the region between the upstream and downstream primary filter units 22. For example, only 40% to 70% of the region between the upstream and downstream primary filter units 22 is filled with the filter assembly 21, such that when the to-be-treated water flows into the region of the first receiving space 202, additional space available in the region allows the filter assembly 21 to be flipped by the turbulent currents generated by the water flow, so as to increase the contact and reaction between the to-be-treated water and the filter assembly 21, thereby increasing the concentration of the silicic acid and the hydrogen gas in the thus produced water composition in a shorter time period, as well as enhancing the service life of the filter assembly 21. In another variation of this embodiment, a hollow fiber membrane (not shown) may be received in the first receiving space 202 of the first housing 20, for example, in the flow channel 2001.

Referring to FIG. 4B, a second embodiment of a filter device 2 according to the present disclosure is similar to the first embodiment of the filter device 2, except that the second embodiment of the filter device 2 further includes an auxiliary filter assembly 23 composed of one or more auxiliary filters 11, each of which may optionally include an antimicrobial component supported on a surface thereof.

Examples of the auxiliary filter 11 may include, but are not limited to, activated carbon, ceramic, bamboo charcoal, medical stone, quartz sand, diatomaceous earth, ore, zeolite, silicon granules, polymer fiber, soluble glass (such as sodium silicate), and combinations thereof. Examples of the antimicrobial component may include, but are not limited to, nano silver particles, nano zinc particles, and the combination thereof. In an exemplary embodiment, the auxiliary filter 11 is an activated carbon that includes nano zinc particles adsorbed on the surface thereof. In another exemplary embodiment, the auxiliary filter 11 is a combination of an activated carbon and a soluble glass, and includes nano zinc particles supported on the surface thereof. When reacting with the to-be treated water, the nano silver particles and the nano zinc particles supported on the auxiliary filters 11 are capable of releasing silver ions and zinc ions for inhibiting microorganisms that may grow in the filter assembly 21 and the thus produced water composition. As shown in FIG. 4B, the auxiliary filter assembly 23 is interposed in a middle portion of the filter assembly 21, but is not limited thereto. In a variation of this embodiment, the auxiliary filter assembly 23 may be substantially mixed with the filter assembly 21, so that these assemblies 21, 23 are evenly distributed in the first receiving space 202.

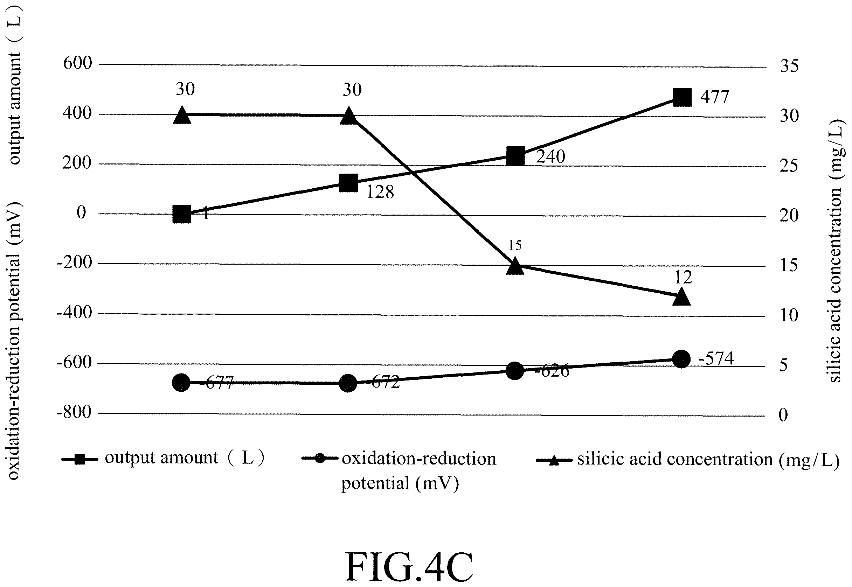

FIG. 4C is a graph illustrating oxidation-reduction potential (ORP) and silicic acid concentration determined of a water composition produced by the first embodiment of the filter device 2 at different output amount of the water composition. The carrier material 102 of the filter assembly 21 in the filter device 2 was activated carbon purchased from Haycarb PLC (Model No. : RWAP 1074, 12 X 40 mesh), and has a diameter ranging from 0.425 mm to 1.7 mm and a total weight of 4587.5 g. The silicon material 106 is present in an amount of 78.2 wt% based on 100 wt% of the filter assembly 21. The ORP of the water composition was measured using electrodes (Manufacturer: JAQUA; Model: EO221) and an oxidation-reduction potential (ORP) analyzer (Manufacturer: Horiba Ltd.; Model: F-51). The water composition was subjected to colorimetric measurement using a silicate test kit (MColortest™, Merck) to determine silicic acid concentration.

As shown in FIG. 4C, when the water composition was outputted at the beginning (i.e., the output amount of 1 L), the silicic acid concentration and the ORP value thereof were 30 mg/L and -677 mV, respectively, and when the output amount of the water composition increased to 477 L, the silicic acid concentration decreased to 12 mg/L, and the ORP value slightly increased to -574 mV.

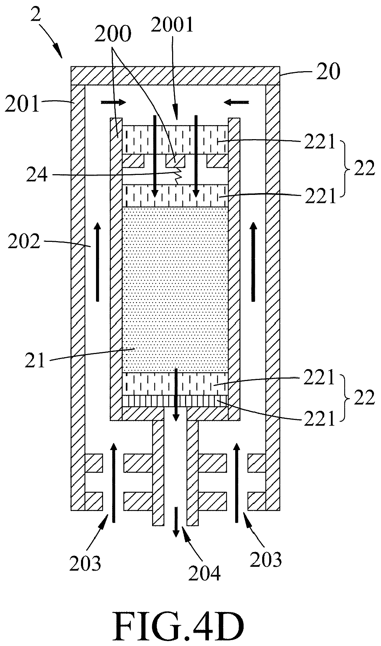

Referring to FIG. 4D, a third embodiment of a filter device 2 according to the present disclosure is similar to the first embodiment, except that the first housing 20 in this embodiment includes at least two first inlets 203 spaced apart from the first outlet 204, all of which are disposed at the bottom side of the first housing 20. In addition, the filter assembly 21 and the upstream and downstream primary filtering units 22 are disposed in the flow channel 2001 defined by the inner tubular wall 200, which extends from the bottom side of the first housing 20 towards the top side of the first housing 20. The upstream primary filter unit 22 may include at least one elastic foam sponge 221 (e.g., having a pore diameter ranging from 5 to 40 µm) to effectively slow down the flow rate of the to-be-treated water. The downstream primary filter unit 22 may include the elastic foam sponge 221 and a non-woven fabric 222 (e.g., having a pore diameter of 5 µm) . In other embodiments, the auxiliary filter assembly 23 (not shown) can be optionally interposed in the middle portion of the filter assembly 21, but is not limited thereto.

In use, the to-be-treated water, before reaching the filter assembly 21, is required to travel a long distance (e.g., approximate the length of the first housing 20) from the first inlet 203 toward the top side of the first housing 20, and then downward to the upstream primary filter unit 22. With such configuration, the flow rate of the to-be-treated water can be effectively slowed down, thereby reducing the loss of the silicon material 106 from the filter assembly 21. As such, contamination caused by fallen silicon material 106 in the water composition (e.g., becoming turbid), and clogging of the downstream primary filter unit 22 can be reduced, thereby extending the service life of the filter assembly 21.

In addition, as shown in FIG. 4D, an elastic component 24 (e.g., a spring) may be further disposed on the inner tubular wall 200 for applying pressure to the primary filter unit 22, so as to compress the filter assembly 21 that is disposed downstream of the primary filter unit 22.

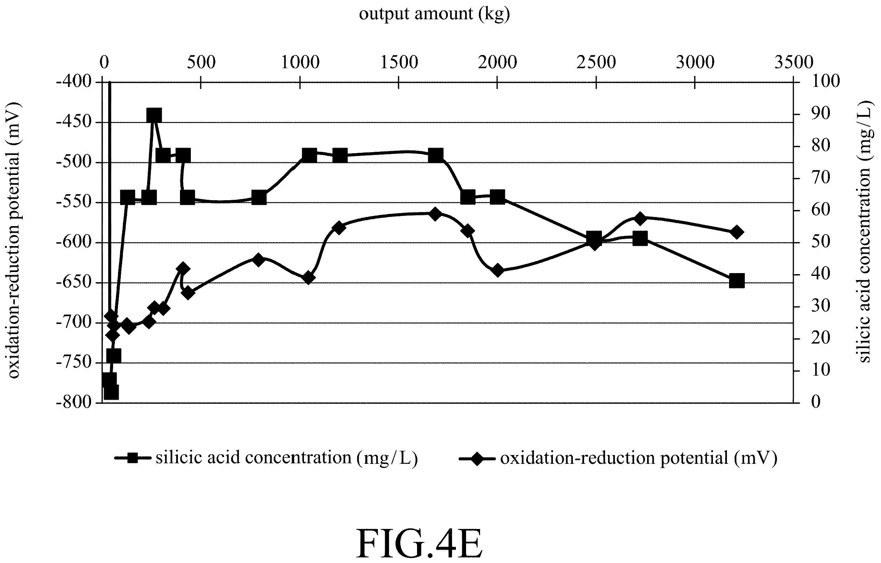

FIG. 4E is a graph illustrating oxidation-reduction potential (ORP) and silicic acid concentration determined at different output amount of the water composition that is produced by the filter device 2 of the third embodiment. The filter assembly 21 of the filter device 2 includes the activated carbon (Manufacturer: Haycarb PLC; Model No. : RWAP 1074 with 12 x40 mesh, i.e., a diameter ranging from 0.425 mm to 1.7 mm) as the carrier material 102, and is prepared using the apparatus as shown in FIG. 3 and then screened using three different sieve meshes. That is, the filter assembly 21 includes the filters 10 having three different average particle diameters, which are, 14.3 wt% of the filters 10 having a first average particle diameter of less than 0.55 mm (i.e., <30 mesh), 47.6 wt% of the filters 10 having a second average particle diameter ranging from 0.55 mm to 2 mm (i.e., 8 to 30 mesh), and 38.1 wt% of the filters 10 having a third average particle diameter ranging from 2 mm to 4 mm (i.e., 5 to 8 mesh). The water composition produced by the filter device 2 was collected for 3 minutes in every hour, for a total of 90 L per day, and then the collected water composition was subjected to the silicic acid concentration and the ORP value measurement as described above. As shown in FIG. 4E, the highest silicic acid concentration and the lowest ORP value were 90 mg/L and -715 mV, respectively. When the output amount of the water composition increased up to 3212 L, the silicic acid concentration was still maintained at 38 mg/L, and the ORP value was maintained at -587 mV. Moreover, it also has been experimentally verified that the filter assembly 21 composed of the three classes of filters 10 with the predetermined weight percentage ratio has better performance than that of the filter assembly 21 composed of only one of the three classes of filters 10 (data not shown) . These results indicate that by virtue of adjustment of the weight percentage ratio of the aforementioned filters 10 having different average particle diameters in the filter assembly 21, the contact area between the filter assembly 21 and the water composition may be optimized, which results in an improved performance of the filter assembly 21 of the filter device 2 as compared to the filter assembly 21 composed of merely the filters 10 having small, large or random size of the average particle diameter. In other words, when the filter assembly 21 includes filters 10 having at least two different average particle diameters, the water composition produced thereby may exhibit improved desired properties.

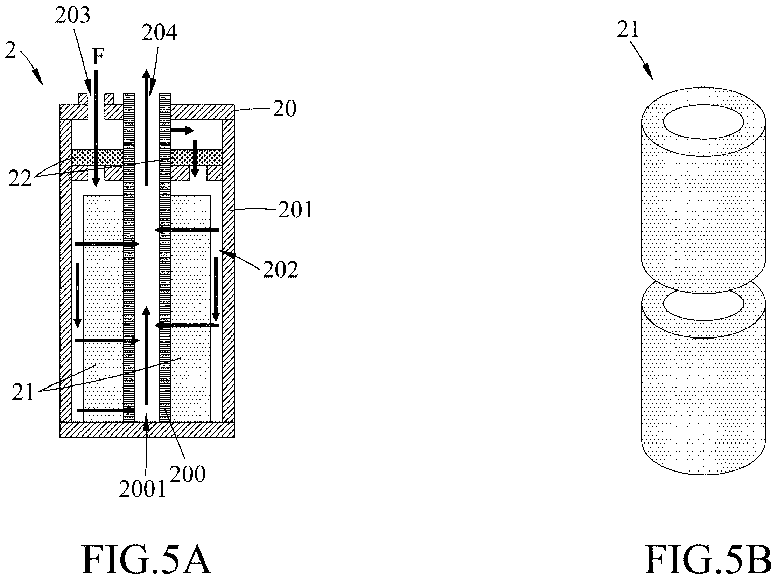

Referring to FIG. 5A, a fourth embodiment of a filter device 2 is similar to the first embodiment, except that the fourth embodiment of the filter device 2 includes one primary filter unit 22 that is disposed upstream of the filter assembly 21 along the water flow direction (F). The inner tubular wall 200 of the first housing 20 extends from the top side to the bottom side of the first housing 20, and has multiple pores (not shown in the figures) for water to pass through. In addition, the filter assembly 21 is integrally shaped as a columnar block, such as sintered activated carbon or compressed activated carbon. As shown in FIG. 5B, the filter assembly 21 may also be shaped as two spaced-apart columnar blocks, each having a central through hole. In use, a predetermined amount of the to-be-treated water is introduced to the first housing 20 through the first inlet 203 along the water flow direction (F), and then sequentially flows through the primary filter unit 22 and the filter assembly 21 to react with the silicon material 106 therein. After that, the resultant water composition produced by the filter assembly 21 passes through the pores of the inner tubular wall 200 and flows along the flow channel 2001 and leaves the first housing 20 through the first outlet 204. In a variation of this embodiment, a hollow fiber membrane (not shown in the figures) may be received in the first receiving space 202 of the first housing 20, for example, in the flow channel 2001.

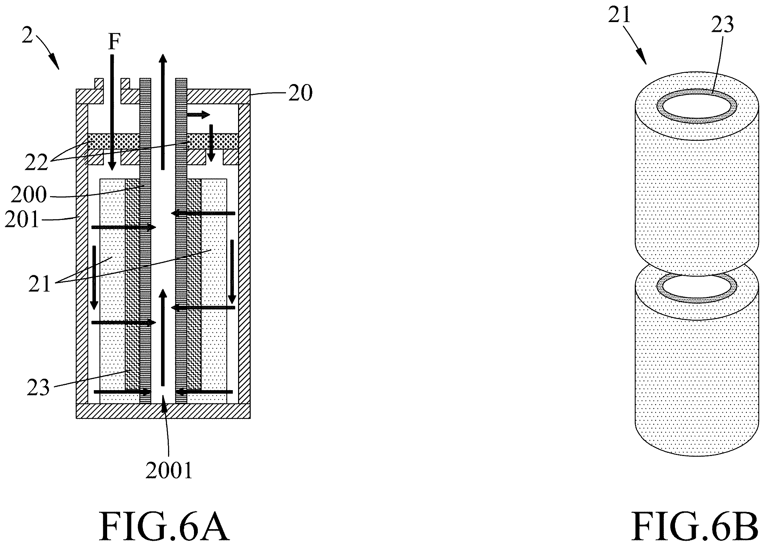

Referring to FIG. 6A, a fifth embodiment of a filter device 2 according to the present disclosure is similar to the fourth embodiment, except that the fifth embodiment of the filter device 2 further includes the auxiliary filter assembly 23 as described in the second embodiment of the filter device 2. As shown in FIG. 6B, the auxiliary filter assembly 23 is formed as a filter layer that is disposed on an inner side of the filter assembly 21, but is not limited thereto. In a variation of this embodiment, the auxiliary filter assembly 23 may be thoroughly mixed with the filter assembly 21, so that these assemblies 21, 23 are evenly distributed within the first receiving space 202.

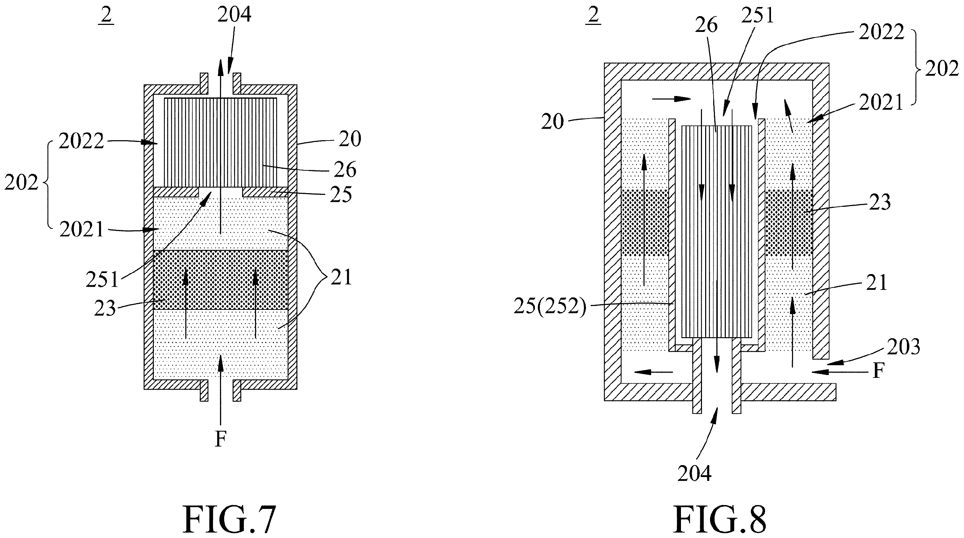

Referring to FIG. 7, a sixth embodiment of a filter device 2 according to the present disclosure includes a first housing 20, a filter assembly 21, a spacer 25 and a hollow fiber membrane 26. The first housing 20 defines a first receiving space 202, and has a first inlet 203 and a first outlet 204 which are respectively positioned at opposite sides (i.e., a bottom side and a top side) of the first housing 20. The spacer 25 extends from a lateral surface of the first housing 20 into the first receiving space 202, so as to divide the first receiving space 202 into a first sub-receiving space 2021 and a second sub-receiving space 2022 that are respectively fluidly communicated with the first inlet 203 and the first outlet 204. The spacer 25 is formed with at least one opening 251 for fluidly communicating the first sub-receiving space 2021 and the second sub-receiving space 2022. The diameter and the number of the opening 251 can be adjusted according to the practical requirements. The filter assembly 21 is received in the first sub-receiving space 2021, and the hollow fiber membrane 26 is received in the second sub-receiving space 2022. In certain embodiments, at least one auxiliary filter 11 as described above may be optionally disposed in the first sub-receiving space 2021 or thoroughly mixed with the filter assembly 21 to be evenly distributed within the first sub-receiving space 2021. In this embodiment, multiple auxiliary filters 11 (i.e., the abovementioned auxiliary filter assembly 23) are interposed in the middle portion of the filter assembly 21. In use, a predetermined amount of the to-be-treated water is introduced to the first housing 20 through the first inlet 203 along the water flow direction (F), and flows through the filter assembly 21 and the auxiliary filter assembly 23 to produce the water composition containing the silicic acid and hydrogen gas. Afterwards, the water composition flows into the second sub-receiving space 2022 where a further filtration is conducted by the hollow fiber membrane 26, and then flows out of the first housing 20 through the first outlet 204.

Referring to FIG. 8, a seventh embodiment of a filter device 20 according to the present disclosure is similar to the sixth embodiment of the filter device 2. The difference resides in that, in the seventh embodiment, both of the first inlet 203 and the first outlet 204 are positioned at the bottom side of the first housing 20. The spacer 25 includes a peripheral wall 252 extending from the bottom side of the first housing 20 toward the top side the first housing 20 to define the opening 251 that is proximate to the top side of the first housing 20. Each of the filter assembly 21 and the auxiliary filter assembly 23 is formed with a central through hole which corresponds in position to the second sub-receiving space 2022. As shown in FIG. 8, since the second sub-receiving space 2022 is defined by the spacer 25 that extends in a length direction of the housing 20 (as compared with the width direction of the housing 20 as shown in FIG. 7), the length of the hollow fiber membrane 26 would be greater than that in the sixth embodiment, which means the water composition would flow through the hollow fiber membrane 26 along the water flow direction (F) for a relatively longer distance and time, thereby improving the filtering effect so as to effectively remove undesired microorganisms and/or impurities.

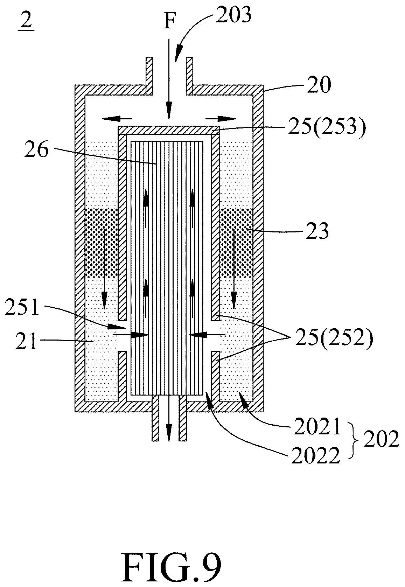

Referring to FIG. 9, an eighth embodiment of a filter device 2 according to the present disclosure is similar to the seventh embodiment of the filter device 2, except for the following differences. To be specific, in this embodiment, the first inlet 203 and the first outlet 204 are positioned at the top side and the bottom side of the first housing 20, respectively. The spacer 25 further includes a covering wall 253 that is spaced apart from the top side of the first housing 20, and that covers a terminal end of the peripheral wall 252 proximate to the top side of first housing 20. The peripheral wall 252 of the spacer 25 is formed with at least one opening 251 proximate to the bottom side of the first housing 20 for fluidly communicating the first sub-receiving space 2021 and the second sub-receiving space 2022. In use, after the water composition produced by the filter assembly 21 flows into the second sub-receiving space 2022 through the opening 251, some of the water composition would flow through the hollow fiber membrane 26 in an upward direction towards the covering wall 253 of the spacer 25 and then in an downward direction towards the first outlet 204, which may allow the water composition to flow through the hollow fiber membrane 26 for a relatively longer distance and time, thereby achieving an improved filtering effect as compared to those of the sixth and seventh embodiments.

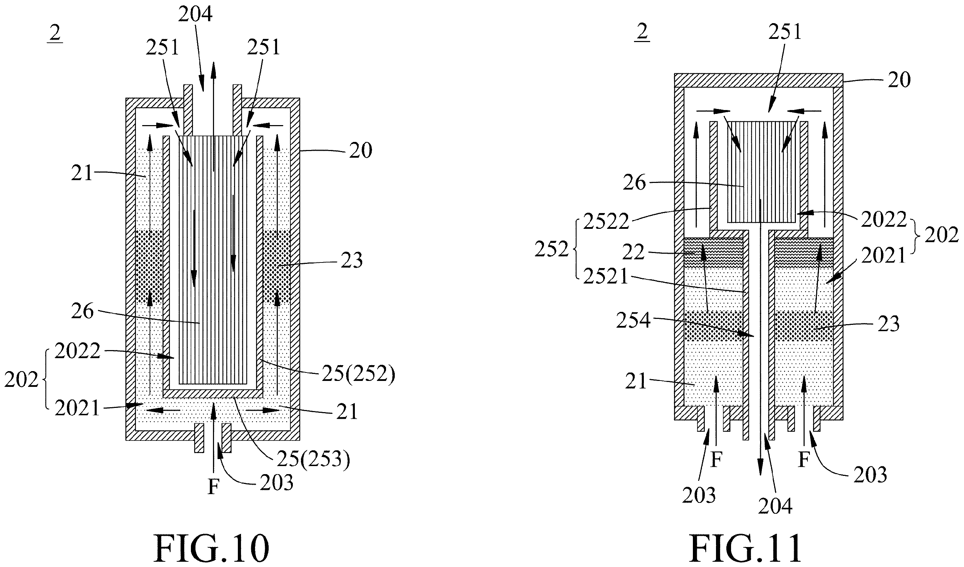

Referring to FIG. 10, a ninth embodiment of a filter device 2 according to the present disclosure is similar to the eighth embodiment of the filter device 2, except for the following differences. To be specific, the first inlet 203 and the first outlet 204 are positioned at the bottom side and the top side of the first housing 20, respectively. The spacer 25 includes the covering wall 253 that is spaced apart from the bottom side of the first housing 20, and the peripheral wall 252 that extends from a periphery of the covering wall 253 toward the top side of the first housing 20 to define at least one opening 251 that is proximate to the top side of the housing 20. With such configuration, when the water composition produced by the filter assembly 21 flows into the second sub-receiving space 2022 through the opening 251, some of the water composition would flow in a direction downward toward the covering wall 253 of the spacer 25 and then in a direction upward toward the first outlet 204 (i.e., approximate twice the length of the hollow fiber membrane 26). That is, the water composition may flow through the hollow fiber membrane 26 for a relatively longer distance and period, thereby achieving an excellent filtering effect.

Referring to FIG. 11, a tenth embodiment of a filter device 2 according to the present disclosure is similar to the seventh embodiment of the filter device 2, except for the following differences. To be specific, the peripheral wall 252 of the spacer 25 includes a first section 2521 that is adjacent to the bottom side of the first housing 20, and a second section 2522 that connects to the first section 2521 and that has a diameter larger than a diameter of the first section 2521. The first section 2521 is configured to define an outlet flow channel 254 that is in fluid communication with the first outlet 204 and the second sub-receiving space 2022 that is defined by the second section 2522. In addition, the filter device 2 includes two first inlets 203 that are spaced apart from each other, and further includes a primary filter unit 22 as described in the first embodiment of the filter device 2, which is disposed in the second section 2522 and downstream of the filter assembly 21 along the water flow direction (F). In use, the water composition produced by the filter assembly 21 flows through the primary filter unit 22 to remove impurities with a large particle size, then flows through the hollow fiber membrane 26, and finally flows out of the first housing 20 along the outlet flow channel 254.

It should be noted that, the filter assemblies 21 used in the above sixth to the tenth embodiments of the filter devices 2 may include at least one of the abovementioned examples of the filter assemblies (e.g., the first to the fifteenth examples of the filter assemblies) or the abovementioned filters 10 (e.g., the first to the sixth embodiments of the filters 10) . The filters 10 may be further mixed with at least one auxiliary filter 11. Moreover, in other embodiments, the filter assembly 21 may be partially filled in the first sub-receiving space 2021, for example, 40% to 80% of a total volume of the first sub-receiving space 2021.

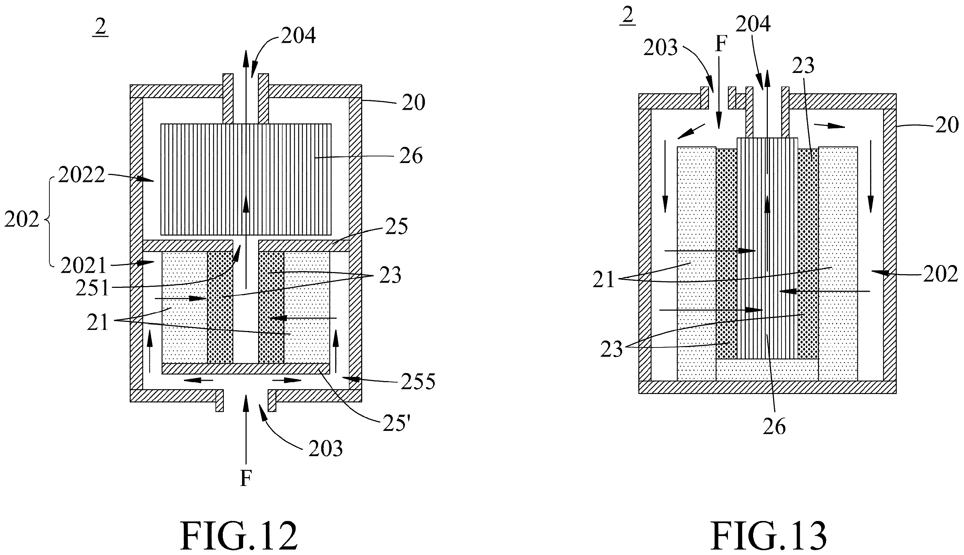

Referring to FIG. 12, an eleventh embodiment of a filter device 2 according to the present disclosure is similar to the sixth embodiment of the filter device 2, except for the following differences. To be specific, the eleventh embodiment of the filter device 2 further includes an additional spacer 25' that is spaced apart from the spacer 25 and proximate to the bottom side of the first housing 20, and that is configured to form an inlet flow channel 255 that is in fluid communication with the first inlet 203 and the filter assembly 21. Each of the auxiliary filter assembly 23 and the filter assembly 21 is formed with a central through hole (as shown in FIG. 6B) that is in spatial communication with the opening 251. The filter assembly 21 is disposed to surround the auxiliary filter assembly 23. It should be noted that the auxiliary filter assembly 23 may be omitted or evenly mixed with the filter assembly 21. In use, the to-be-treated water introduced to the first housing 20 through the first inlet 203 substantially fills the inlet flow channel 255 and then flows through the filter assembly 21 and the auxiliary filter assembly 23 to produce the water composition containing the silicic acid and hydrogen gas. The water composition then flows into the second sub-receiving space 2022 through the opening 251 to be filtered by the hollow fiber membrane 26, and then flows out of the first housing 20 through the first outlet 204.

Referring to FIG. 13, a twelfth embodiment of a filter device 2 according to the present disclosure is similar to the eleventh embodiment of the filter device 2, except for the following differences. To be specific, the spacers 25, 25' are omitted in this embodiment. The first inlet 203 and the first outlet 204 are disposed at the top side of the first housing 20. In addition, the filter assembly 21 is formed with a central hole (rather than a through hole) for the disposition of the auxiliary filter assembly 23 and the hollow fiber membrane 26, which is surrounded by the auxiliary filter assembly 23. In use, the to-be-treated water introduced to the first housing 20 through the first inlet 203 substantially fills the first receiving space 202 and flows through the filter assembly 21 to produce the water composition, and then the water composition flows through the auxiliary filter assembly 23 and the hollow fiber membrane 26, and finally flows out of the first housing 20 through the first outlet 204.

The auxiliary filter assembly 23 may be optionally included in all of the aforementioned embodiments of the filter device 2, and the auxiliary filter assembly 23 may or may not include the antimicrobial component.

According to this disclosure, a water purification system 4, which is adapted for purifying water and producing a water composition containing silicic acid and hydrogen gas, includes at least one filter device 2 as mentioned above as a first filter device 2.

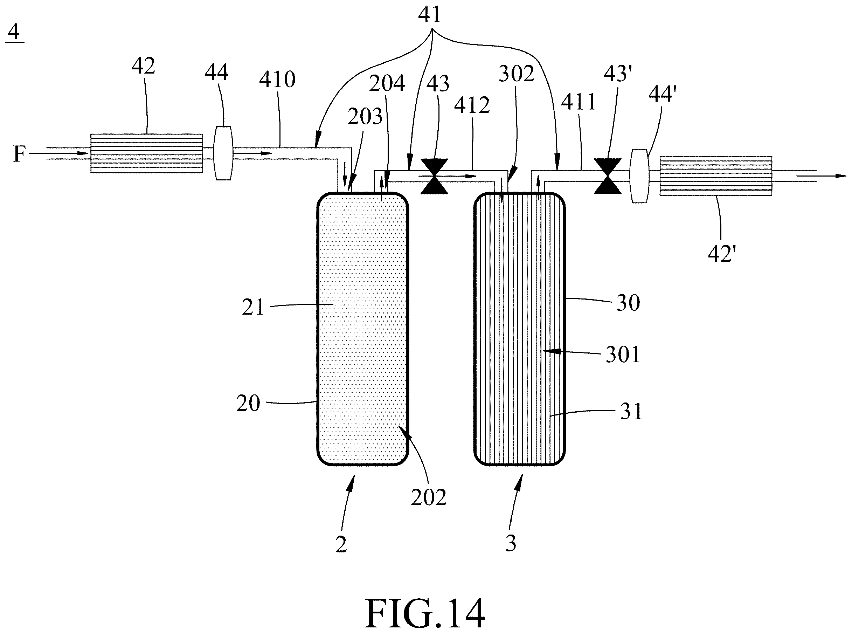

Referring to FIG. 14, a first embodiment of a water purification system 4 according to the present disclosure is adapted for purifying water and producing a water composition containing silicic acid and hydrogen gas. The water purification system 4 includes at least one embodiment of the filter device 2 mentioned above as a first filter device 2, a second filter device 3, and a pipeline unit 41. In this embodiment, the first inlet 203 and the first outlet 204 are disposed on the top side of the first housing 20, but is not limited thereto.

The second filter device 3 is disposed downstream of the first filter device 2 along the water flow direction (F). The second filter device 3 has a second housing 30 that defines a second receiving space 301, and a hollow fiber membrane 31 that is received in the second receiving space 301. The second housing 30 includes a second inlet 302 and a second outlet 303 that are disposed at the same side (i.e., a top side) of the second housing 30 and that are in fluid communication with the second receiving space 301. In other variations of this embodiment, the second inlet 302 and the second outlet 303 may be disposed on a bottom side of the second housing 30, or may be respectively disposed on two opposite sides of the second housing 30 according to the practical requirements.

In other embodiments, when the first filter device 2 includes the hollow fiber membrane 26 of the embodiments of the filter device 2 as shown in FIGS. 7 to 13, the second filter device 3 can be optionally omitted.

The pipeline unit 41 includes a inlet pipe 410 that is connected to the first inlet 203, a outlet pipe 411 that is connected to the second outlet 303, and a first transport pipe 412 that fluidly connects the first outlet 204 of the first filter device 2 and the second inlet 302 of the second filter device 3.

For producing the water composition, a to-be-treated water delivered by the inlet pipe 410 is first introduced to the first filter device 2 through the first inlet 203 along the water flow direction (F), and flows through the filter assembly 21 to produce the water composition. The thus produced water composition flows into a first transport pipe 412 through the first outlet 204, and then is introduced to the second filter device 3 through the second inlet 302 for filtration. The filtered water composition flows into the outlet pipe 411 through the second outlet 303. The hollow fiber membrane 31 may include a plurality of hollow fibers, and each of which is formed with through holes having diameters ranging from 10 nm to 200 nm, so that impurities having diameters larger than those of the through holes, e.g., microorganisms, silicon material (such as nano silicon particles), nano silver/zinc particles that are potentially present in the water composition, would be filtered out by the hollow fibers, thereby preventing these impurities from flowing out from the second outlet 303.

The water purification system 4 may optionally further include at least one ultraviolet light sterilization unit 42. In this embodiment, the water purification system 4 includes two ultraviolet light sterilization unit 42, 42' that are disposed upstream of the first filter device 2 for sterilizing the to-be-treated water and disposed downstream of the second filter device 3 for sterilizing the thus produced and filtered water composition, and are fluidly connected to the first filter device 2 via the inlet pipe 410 and to the second filter device 3 via the outlet pipe 411, respectively. Alternatively, the ultraviolet light sterilization unit 42 may be disposed between the first and second filter devices 2, 3 for sterilizing the thus produced water composition along the water flow direction (F), and is fluidly connected to the first and second filter devices 2, 3 via the first transport pipe 412 (not shown in the figures) . With the ultraviolet light sterilization unit 42 disposed upstream of the first filter device 2, the microorganisms present in the to-be-treated water that might enter into the first filter device 2 is greatly reduced, which may effectively prevent the microorganisms from growing in the filter assembly 21, and also avoid polymerization of the silicic acid in the water composition.

The water purification system 4 may include at least one discharge unit 43 that is a pressure relief valve for discharging, a liquid including silicic acid, a gas including hydrogen gas or the combination thereof. In this embodiment, first and second discharge units 43, 43' are disposed downstream of the first filter device 2 and downstream of the second filter device 3, and are operationally connected to the first transport pipe 412 and the outlet pipe 411 of the pipeline unit 41, respectively. During production of the water composition in the first filter device 2, silicic acid and hydrogen gas will be continuously generated and accumulated, causing undesired high pressure in the first transport pipe 412 that can adversely affect liquid flow or even cause the pipeline unit 41 to burst. The first discharge unit 43 may release the undesired high pressure in the first transport pipe 412 so as to enhance the liquid flow and to avoid bursting thereof, as well as to prevent accumulation of silicic acid. The second discharge unit 43' is used to discharge a portion of the water composition and undesired high pressure in the outlet pipe 411 if the thus produced water composition and hydrogen gas accumulate to a relatively high level, so as to enhance the liquid flow and to avoid bursting of the outlet pipe 411, as well as to prevent microorganism from growing therein.

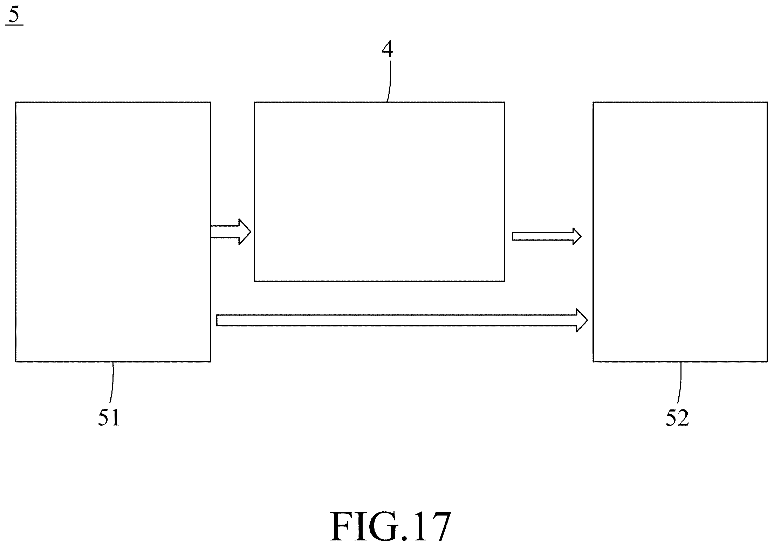

In this embodiment, the water purification system 4 further includes two measuring units 44, 44' (i.e., total dissolved solids (TDS) meters) that are respectively mounted upstream and downstream of the first filter device 2 along the water flow direction (F) for measuring the TDS amounts of the to-be-treated water and the thus produced water composition. Specifically, the measuring unit 44 disposed upstream of the first filter device 2 is operationally connected to the inlet pipe 410 that connects a water supply system 51 (see FIG. 17) and the first inlet 203 of the first filter device 2, and the measuring unit 44' disposed downstream of the first filter device 2 is operationally connected to the outlet pipe 411 that connects the second outlet 304 of the second filter device 3 and the ultraviolet light sterilization unit 42' . It should be noted that the TDS amount (hereinafter referred to as Vₜ) measured by the measuring unit 44' is greater than the TDS amount (hereinafter referred to as Vₒ) measured by the measuring unit 44. Once the difference (ΔV) between Vₜ and Vₒ is smaller than a predetermined value, it indicates that the amounts of silicic acid and hydrogen gas in the water composition have significantly decreased, and replacement of the filter assembly 21 of the first filter device 2 is required. The determined ΔV may be affected by several properties of the filter 10, such as the amounts and average particle diameters of the nano silicon particles and the carrier material 102 contained therein, etc. Under a normal operating state of the water purification system 4, the determined ΔV may ranges from 10 µS/cm to 150 µS/cm, preferably from 20 µS/cm to 120 µS/cm, and more preferably from 30 µS/cm to 90 µS/cm, and the silicic acid concentration of the water composition ranges from 8 mg/mL to 90 mg/L, preferably from 10 mg/mL and 50 mg/mL, based on an equation of 1 ppm (TDS amount)= 1 mg/mL (silicic acid concentration) = 2 µS/cm (TDS conductivity).

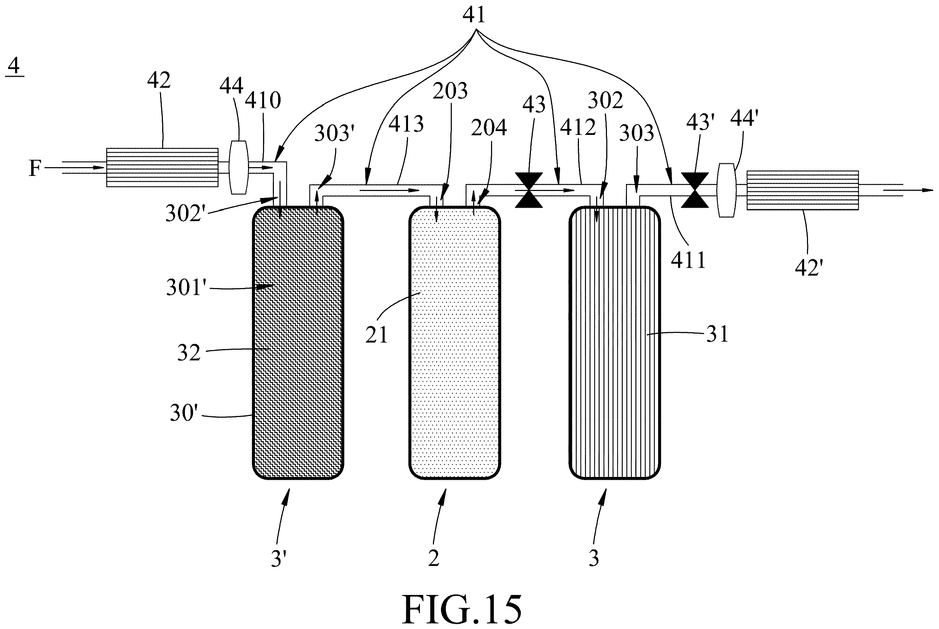

Referring to FIG. 15, a second embodiment of the water purification system 4 according to the present disclosure is similar to the first embodiment of the water purification system 4, except that the second embodiment of the water purification system 4 further includes a third filter device 3' that is disposed upstream of the first filter device 2 along the water flow direction (F), but is not limited thereto. In certain embodiments, the third filter device 3' is disposed downstream of the first filter device 2' along the water flow direction (F). The third filter device 3' includes a third housing 30' that defines a third receiving space 301', and a third inlet 302' and a third outlet 303' which are fluidly communicated with the third receiving space 301'. The third inlet 302' and the third outlet 303' are disposed on a top side of the third housing 30', but is not limited thereto. The third inlet 302' and the third outlet 303' may be disposed on a bottom side of the third housing 30', or may be respectively disposed on two opposite sides of the third housing 30'. The third filter device 3' includes at least one auxiliary filter 32 having an antimicrobial component supported thereon as described above that is received in the third receiving space 301' of the third housing 30'. The third outlet 303' of the third filter device 3' and the first inlet 203 of the first filter device 2' are fluidly connected to each other through a second transport pipe 413 of the pipeline unit 41 and the third inlet 302' is fluidly connected to the inlet pipe 410. In use, the to-be-treated water is first introduced to and filtrated by the third filter device 3' through the third inlet 302' along the water flow direction (F), after which the filtered water is delivered from the third outlet 303' into the second transport pipe 413 , and then is introduced to the first filter device 2 through the first inlet 203 to produce the water composition containing the silicic acid and hydrogen gas. The thus produced water composition flows out from the first outlet 204 and then into the second filter device 3 for further filtration.

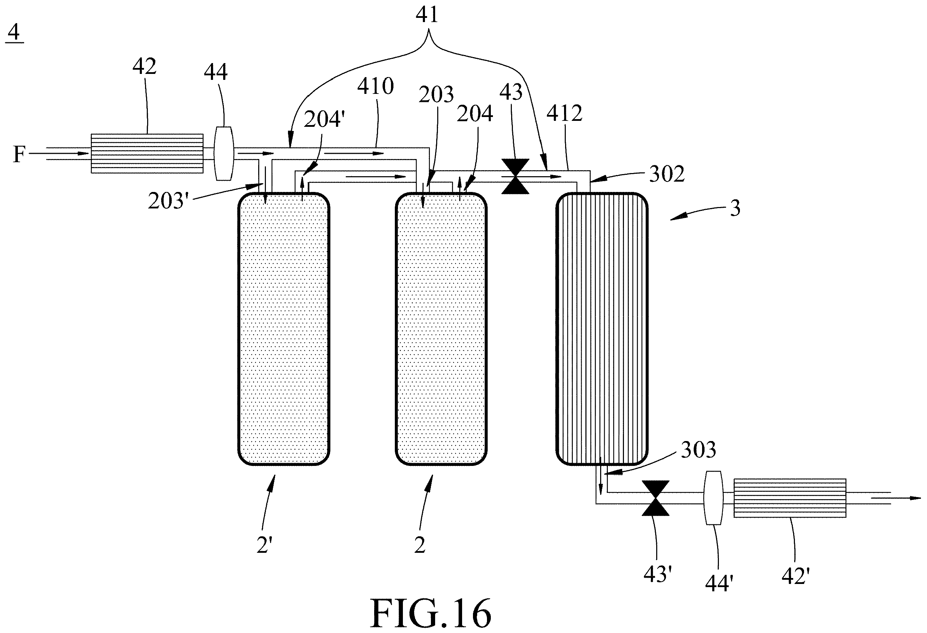

Referring to FIG. 16, a third embodiment of the water purification system 4 according to the present disclosure is similar to the second embodiment of the water purification system 4, except that the third filter device 3' of the second embodiment is replaced by another first filter device 2' in the third embodiment, and the pipeline unit 41 of the third embodiment is designed to deliver the to-be-treated water to the two first filter devices 2, 2' which are disposed in parallel. In addition, the pipeline unit 41 includes an inlet pipe 410 that is fluidly connected to the first inlets 203, 203' of the first filter devices 2, 2', a first transport pipe 412 that is fluidly connected to the first outlets 204, 204' of the two first filter devices 2, 2' and the second inlet 302, and an outlet pipe 411 that is fluidly connected to the second outlet 303' . By connecting the two (or even more) first filter devices 2, 2' in parallel, the to-be-treated water can be efficiently reacted with the silicon material 106, so as to produce the water composition having a desired concentration of the silicic acid and hydrogen gas in a relatively shorter time period.

It is worth mentioning that, in each of the first to third embodiments of the water purification system 4, a reflux unit (not shown in the figures) may be further included and may be disposed downstream of the first filter device(s) 2 (2') for circulating the treated water (i.e., the water composition) flowing out therefrom back thereto, so as to allow the treated water to be reacted again with the silicon material 106 in the first filter device (s) 2. Therefore, the water composition can be obtained in an efficient manner and may have a relatively higher concentration of silicic acid and hydrogen gas. That is, the concentration of the silicic acid and the hydrogen gas present in the water composition can be adjusted by controlling the circulating times of the treated water back to the first filter device (s) 2 by the reflux unit (i.e., the times of the treated water undergoing reaction with the silicon material 106) . In certain embodiments, at least one flow switch (not shown in the figures) may be further disposed upstream of the first filter (s) 2 to control the water flow direction (F) of the to-be-treated water in the water purification system 4, thereby further modulating the production rate and the concentration of the silicic acid and the hydrogen gas present in the water composition. For example, the to-be-treated water may be controlled to flow through the first filter device (s) 2 if a relatively lower concentration of silicic acid and hydrogen gas is required. If a higher concentration of silicic acid and hydrogen gas is required, the to-be-treated water may be controlled by the flow switch in combination with the reflux unit to flow through the first filter device (s) 2 for multiple times. In certain embodiments, the water purification system 4 further includes a computerized control panel (not shown in the figures), which is configured to control the reflux unit (i.e., the circulating times of the treated water back to the first filter device (s) 2) and/or to control whether a given amount of drinking water is required to be mixed with the treated water, thereby obtaining a desired concentration of the silicic acid and hydrogen gas.

In certain embodiments, the water purification system 4 may further include a degassing unit for removing hydrogen gas and/or an auxiliary filter device containing an ion exchange resin or oxide or hydroxide of a polyvalent cation for removing or absorbing silicic acid, so as to prepare different types of water (i.e., other than the abovementioned water composition), such as hydrogen-dissolved water that is devoid of silicic acid, silicic acid-dissolved water that is devoid of hydrogen gas, and pure water that is devoid of hydrogen gas and silicic acid. By virtue of the computerized control panel or the flow switch, the to-be-treated water can be selectively determined to flow through one of the first filter device 2, the second filter device 3, the degassing unit, the auxiliary filter device containing an ion exchange resin, the auxiliary filter device containing oxide or hydroxide of a polyvalent cation, and combinations thereof, so as to obtain the abovementioned different types of water or the water composition according to the user's requirements.

Referring to FIG. 17, a water processing apparatus 5 according to the present disclosure is provided and includes a water supply system 51, the water purification system 4 as described above that is fluidly connected to the water supply system 51, and optionally, a water temperature-regulating system 52 that is fluidly connected to the water supply system 51 and/or the water purification system 4 for regulating the temperature of the to-be-treated water and/or the thus produced water composition. The water supply system 51 may include a commercially available reverse osmosis (R.O.) device, or any other type of water purification equipment, so as to supply filtered water to the water purification system 4. However, natural water, mineral water, underground water or other unfiltered water may be used directly as well. The water temperature-regulating system 52 may heat and/or cool down the water temperature so as to obtain the water composition having a desired temperature (cold, hot or warm).

According to this disclosure, the water composition, which may be produced by any of the abovementioned embodiments and examples of the filters 10, the filter assemblies, the filter devices 2, and the water purification systems 4 of the present disclosure, has a silicic acid concentration that ranges between 8 mg/L and 90 mg/L, preferably between 10 mg/L and 50 mg/L; has an oxidation-reduction potential (ORP) value that is not higher than -100 mV, preferably not higher than -300 mV, more preferably not higher than -550 mV, and even more preferably not higher than -650 mV.

Apart from being used as drinking water, the water composition can be added into a product to slow down the oxidation rate of the product or applied to animals to facilitate formation of connective tissue thereof. The product may be externally or internally applied to the animals. Examples of the product may include, but are not limited to, a skin care product and a beverage. The animal may be a vertebrate, but is not limited thereto.

Examples of the skin care product may include, but are not limited to, toning lotions, moisturizing lotions, moisturizing creams, essences, whitening lotions, whitening milks, whitening creams, etc. The water composition may be added to existing composition of the skin care product, or may be added to a non-woven fabric that may optionally contain a well-known component used in a facial mask composition, such as L-ascorbic acid, alpha hydroxyl acid, placenta, various plant extracts, etc., so as to prepare a moisturizing facial mask. Preferably, the water composition may be used to replace at least one of an antioxidant component (such as vitamin C, vitamin E, carnosine and coenzyme Q₁₀) and a moisturizing component (such as hyaluronic acid, polyols such as glycerin and collagen) of the facial mask composition. The moisturizing facial mask may be packaged in an airtight manner, e.g., in an airtight bottle, to prevent loss of hydrogen gas therefrom. Alternatively, the water composition may also be filled in an airtight bottle such as an airtight glass bottle, which is in combination with a face mask that may contain well-known components (such as whitening agents, plant extracts, enzymes, etc.) in a dry form, so as to be packaged as a face mask kit. In use, the face mask can be wetted with the water composition.

Examples of the beverage may include, but are not limited to, juices that are easily oxidized (e.g., apple juice), sparkling water, beer, coffee, tea, yogurt, functional drinks, etc., in which the silicic acid and the hydrogen gas can be added to enhance flavor. It should be noted that, acidic juice is more suitable to be added with the silicic acid present in the water composition. The beverage may be packaged in an airtight manner, preferably in an airtight glass bottle. Taking beer as an example, the silicic acid and the hydrogen gas present in the water composition may be used to change the flavor and the taste of the beer. Taking yogurt as an example, a low ORP value of the water composition may activate facultative or obligate anaerobes, such as lactic acid bacteria. Taking sparkling water as an example, the hydrogen gas present in the water composition may be synergized with the gas dissolved in the sparkling water to generate different levels of effervescence taste, and the silicic acid may enhance the nutritional value of the sparking water. Taking coffee as an example, the silicic acid present in the water composition may neutralize acidic molecules in the coffee, such that the coffee loses its acidity. It is noted that the sour taste of the coffee is usually derived from lactic acid and malic acid, the sweet taste thereof is usually derived from citric acid, the pungent smell is usually derived from quinic acid and chlorogenic acid, and the aroma is usually derived from eugenol, in addition to tartaric acid present therein. Thus, the sour taste of the coffee can be moderately diluted when the silicic acid present in the water composition to be added to the coffee is in a concentration ranging from 10 mg/L to 20 mg/L, and for more removal of the sour taste from the coffee, the water composition having the silicic acid concentration that ranges from 20 mg/L to 40 mg/L may be added to the coffee. The water composition can also be used in any other applications where water is needed. For example, the water composition can be applied in a beer brewing process that includes the steps of: (a) subjecting milled grain and water to saccharification to obtain a wort; (b) separating the wort from the milled grain by lautering; (c) boiling the wort with hops; (d) cooling the wort; (e) adding yeast such that the wort is subjected to a fermentation process so as to obtain a beer; (f) subjecting the beer to sterile filtration; and (g) packaging the beer. The water composition may be added in at least one of steps (a), (c), and (e), so as to adjust the concentration of silicic acid that is originally derived from the milled grain, and ensure that the fermentation process is conducted under anaerobic condition. Similarly, the water composition can be applied in a manufacturing process of food and beverages which utilizes bacterial fermentation such as yogurt, probiotic drinks, etc. Specifically, the manufacturing process of yogurt includes the steps of: (a) subjecting milk to sterilization; (b) adding bacterial culture to the milk such that the milk is subjected to a fermentation treatment; (c) evenly stirring the resultant fermentate; (d) filtering the fermentate to obtain the yogurt; and (e) packaging the yogurt, wherein the water composition may be added in at least one of steps (a) and (b) to enhance the fermentation treatment by the bacterial culture.

In addition, the water composition may be applied in the fields of agriculture and fishery. For example, in fishery, the water composition may be added to an aquaculture pond that contains algae and other microorganisms, where silicic acid present in the water composition may contribute to enhance the growth and metabolism of the algae and the microorganisms in the aquaculture pond. Furthermore, the water composition that has a low ORP value provides an environment that may be conducive to the growth of certain obligate and facultative anaerobic bacteria in the aquaculture pond. However, the ORP value may gradually increase due to atmospheric exposure, and thus the aquaculture pond will not be dominated by anaerobic bacteria. The water composition can be added into the aquaculture pond in different amount and times according to the desired environment of the aquaculture pond. In agriculture, the water composition may be added to a soil for enhancing corps growth and providing cells of corps with a desired ORP value, thereby increasing disease resistance and yield of the crops.

It is worth mentioning that, the water composition containing the silicic acid and the hydrogen gas (which contribute to the low OPR value) may also be applied in health care, where it is capable of coordinating various systems in a human body which may be related to oxidative stress-associated diseases, nervous system diseases, skeletal diseases, etc., through different mechanisms. As an example, monitoring the level of oxidative stress and avoiding elevation thereof are important factors in delaying and preventing currently known diseases which are associated with oxidative stress, such as aging, chronic inflammation, cancer, neurodegenerative diseases, cardiovascular diseases, arthritis, diabetes, gout, allergies, autoimmune diseases, and kidney diseases. The presence of silicic acid that is dissolved in the water composition can be used to regulate the formation and activity of metal ions in the cells, which is essential for maintaining cellular balance of oxidant and antioxidant. Specifically, the silicic acid can form complex with inorganic ions to safely isolate iron from cells, so as to reduce the cells' ability to form reactive oxygen species. The hydrogen gas present in the water composition can neutralize free radicals including the reactive oxygen species in the cells. Therefore, the water composition can contribute to health care by protecting the human body from oxidative stress-associated diseases. Taking the skeletal system as another example, the silicic acid present in the water composition may help in the absorption of calcium and vitamin D by the human body, which prevents bone loss. The hydrogen gas present in the water composition can be used to treat joint inflammation and to inhibit differentiation of osteoclasts. Therefore, the water composition can contribute to health care by protecting the skeletal system of the human body. Taking the nervous system as yet another example, since the silicic acid and the hydrogen gas are capable of assimilating into different mechanisms of the various systems in the human body, cell neurotoxicity induced by aluminum can be inhibited, thereby reducing the risk of neurological diseases such as Alzheimer's disease, etc.

In summary, the filter 10 (which includes the carrier material 102 and the silicon material 106 supported on the carrier material 102), the filter assembly, the filter device 2, and the water purification system 4 of the present disclosure is capable of producing the water composition containing increased amount of silicic acid and hydrogen gas by reacting the to-be-treated water with the silicon material 106.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A filter (10) for producing a water composition containing silicic acid and hydrogen gas, **characterized by**:
a carrier material (102); and
a silicon material (106) supported on said carrier material (102),
wherein said filter (10) having a diameter ranging from 50 µm to 10 mm.

2. The filter (10) as claimed in claim 1, **characterized in that** said carrier material (102) includes at least one carrier (1021) that is selected from the group consisting of activated carbon, ceramic, bamboo charcoal, medical stone, quartz sand, diatomaceous earth, ore, zeolite, silicon granule, and polymer fiber.

3. The filter (10) as claimed in claim 2, **characterized in that** said at least one carrier (1021) is said activated carbon, and said silicon material (106) includes a plurality of nano silicon particles that cover a surface (1041) of said activated carbon, said nano silicon particles having an average particle diameter ranging from 50 nm to 800 nm.

4. The filter (10) as claimed in claim 2, **characterized in that** said at least one carrier (1021) is said silicon granule formed by aggregation of a plurality of nano silicon particles, and said silicon material (106) includes a plurality of nano silicon particles that entirely covers said silicon granule, said nano silicon particles having an average particle diameter ranging from 50 nm to 800 nm.

5. The filter (10) as claimed in any one of claims 1 to 4, **characterized in that** said silicon material (106) is present in an amount that ranges from 40 wt% to 95 wt% based on 100 wt% of said filter (10).

6. A filter assembly **characterized by** a plurality of filters (10) as claimed in any one of claims 1 to 5.

7. The filter assembly as claimed in claim 6, further **characterized by** a binder (12) to bind said filters (10) therebetween.

8. The filter assembly as claimed in claim 6 or 7, further **characterized by** at least one auxiliary filter (11) that is selected from the group consisting of activated carbon, ceramic, bamboo charcoal, medical stone, quartz sand, diatomaceous earth, ore, zeolite, silicon granules, polymer fiber, water glass, and combinations thereof,
wherein said auxiliary filter (11) optionally includes an antimicrobial component supported on a surface thereof, said antimicrobial component being selected from the group consisting of nano silver particles, nano zinc particles, and the combination thereof.

9. The filter assembly as claimed in any one of claims 6 to 8, **characterized in that** said filters (10) includes a first group of filters (10) and a second group of filters (10), said carrier material (102) of each of said first group of filters (10) being different from that of each of said second group of filters (10), said silicon material (106) including nano silicon particles that are supported on a surface (104) of each of said carrier materials (102).

10. The filter assembly as claimed in claim 9, **characterized in that** for each of said first group of filters (10), said carrier material (102) includes multiple carriers (1021) each having an average diameter ranging from 0.2 µm to 2 mm, and for each of said second group of filters (10), said carrier material (102) has an average diameter ranging from 25 µm to 2.5 mm.

11. A filter device (2) **characterized by**:
a first housing (20) defining a first receiving space (202) and including a first inlet (203) and a first outlet (204), said first inlet (203) and said first outlet (204) being fluidly communicated with said first receiving space (202); and
a filter assembly (21) as claimed in any one of claims 6 to 10 received in said first receiving space (202) of said first housing (20).

12. The filter device (2) as claimed in claim 11, **characterized in that** said filter assembly (21) further includes a plurality of auxiliary filters (11), each of which is selected from the group consisting of activated carbon, ceramic, bamboo charcoal, medical stone, quartz sand, diatomaceous earth, ore, zeolite, silicon granules, polymer fiber, water glass, and combinations thereof, and each of which optionally includes an antimicrobial component supported on a surface thereof, said antimicrobial component being selected from the group consisting of nano silver particles, nano zinc particles, and the combination thereof.

13. The filter device (2) as claimed in claim 11 or 12, further **characterized by** a spacer (25) that divides said first receiving space (202) of said first housing (20) into a first sub-receiving space (2021) and a second sub-receiving space (2022), a hollow fiber membrane (26) received in said second sub-receiving space (2022), and said filter assembly (21) received in said first sub-receiving space (2021).

14. A water purification system (4), **characterized by** at least one filter device (2) as claimed in any one of claims 11 to 13 as a first filter device (2), a pipeline unit (41) fluidly connecting with said first filter device (2), and optionally a discharge unit (43) disposed downstream of said first filter device (2) and connected to said pipeline unit (41) to discharge a liquid, a gas or the combination thereof from said pipeline unit (41).

15. The water purification system (4) as claimed in claim 14, further **characterized by**:
a second filter device (3) including a second housing (30) defining a second receiving space (301) and a hollow fiber membrane (31) that is received in said second receiving space (301), said second housing (30) including an second inlet (302) and an second outlet (303) fluidly communicating with said second receiving space (301), said second filter device (3) are fluidly connected with said first filter device (2) through said pipeline unit (41),
wherein said second filter device (3) optionally further includes at least one auxiliary filter (32) that contains an antimicrobial component supported on a surface thereof and that is disposed upstream of said hollow fiber membrane (31).
